# EUROPEAN PATENT APPLICATION

(11) **EP 2 355 531 A1**
(43) Date of publication of application: **10.08.2011**
(21) Application number: 10821919.7
(22) Date of filing: 01.10.2010
(51) Int. Cl.: H04N 13/02, G03B 35/02

(54) **IMAGE PROCESSING DEVICE AND METHOD, AND PROGRAM**

(30) Priority: 09.10.2009 JP 2009235402
(71) Applicant: Sony Corporation, Tokyo 108-0075 (JP)
(72) Inventor: YAMASHITA, Noriyuki, Tokyo 142-0054 (JP); HIRAI, Jun, Tokyo 151-0065 (JP)
(74) Representative: Haines, Miles John L.S.
(86) International application number: PCT/JP2010/067198
(87) International publication number: WO 2011/043248

(57) **Abstract**

The present invention relates to an image processing apparatus and method, and a program capable of displaying a stereoscopic image having a more appropriate parallax.

An image capture apparatus 11 captures a plurality of photographic images P(1) to P(N) in a state of being turned around a center of turn C11. In response to an instruction for displaying an image in which a specific region in an area to be captured is displayed, the image capture apparatus 11 selects two photographic images between which parallax having a predetermined magnitude occurs in a subject in the specific region from among photographic images in which the specific region is displayed, and crops regions in which the subject in the specific region is displayed from these photographic images to produce right-eye and left-eye sub-images. These sub-images have an appropriate parallax and therefore are displayed simultaneously using a lenticular method or the like. Thus, a stereoscopic image with depth can be displayed. The present invention can be applied to a camera.

## Description

### Technical Field

The present invention relates to an image processing apparatus and method, and a program, and more specifically to an image processing apparatus and method, and a program designed such that a stereoscopic image having a more appropriate parallax can be obtained.

### Background Art

In recent years, with the prevalence of digital still cameras, the number of users who capture a large number of photographs has increased. Additionally, there is also a demand for an effective presentation method of an enormous number of captured photographs.

For example, so-called panoramic images are known as a way of effectively presenting captured photographs. A panoramic image is a single still image obtained by arranging a plurality of still images side by side, which are obtained by image capturing while panning an image capture apparatus in a certain direction, so that the same subject appears in the still images in an overlapping manner (see, for example, PTL 1).

Such a panoramic image allows a wider area than the area (the angle of view) with which a single still image is captured by a standard image capture apparatus to be displayed as a subject, thus enabling more effective display of photographic images of a subject.

Furthermore, in a case where a plurality of still images are captured while an image capture apparatus is panned in order to obtain a panoramic image, several still images may include the same subject. In such a case, the same subject in the different still images was captured at different positions. Thus, parallax has occurred. Using this, two images having a parallax from each other (hereinafter referred to as a stereoscopic image) are generated from a plurality of still images. Therefore, the images are displayed simultaneously using the lenticular method, so that the subject to be captured can be displayed stereoscopically.

### Citation List

### Patent Literature

PTL 1: Japanese Patent No. 3168443

### Summary of Invention

### Technical Problem

Meanwhile, in a case where a stereoscopic image is to be generated, depending on which image for displaying a region on an image capture area to be captured by an image capture apparatus is to be generated, a still image suitable for the generation differs.

That is to say, the parallax of a subject in a certain still image and the same subject as the subject in another still image changes depending on the distance from the image capture apparatus to the subject during image capture. For example, the parallax of the subject in the background in the region to be captured, which is far away from the image capture apparatus, is smaller than the parallax of the subject in the foreground, which is close to the image capture apparatus.

Therefore, even in stereoscopic images generated using the same still image, the parallax of a stereoscopic image in which the subject in the foreground is displayed is different from the parallax of a stereoscopic image in which the subject in the background is displayed. For this reason, at the time of the generation of a stereoscopic image, it is necessary to select still images having an appropriate parallax as still images used for the generation in accordance with a region to be displayed.

In the technique described above, however, since no consideration is given to parallax for each region to be displayed, it has not been possible to generate a stereoscopic image formed of two images having an appropriate parallax.

The present invention has been made in view of such a situation, and intends to enable a stereoscopic image having a more appropriate parallax to be obtained.

### Solution to Problem

An image processing apparatus in an aspect of the present invention is an image processing apparatus that generates, based on a plurality of photographic images obtained by image capturing using image capturing means while moving the image capturing means, a first sub-image and a second sub-image having a parallax from each other in which a specific region to be captured when the photographic images are captured is displayed, and includes specifying means for specifying two photographic images between which a parallax of a subject in the specific region has a predetermined magnitude among a plurality of the photographic images in which the specific region is displayed, by performing motion estimation utilizing the photographic images; and sub-image generating means for generating the first sub-image and the second sub-image by cropping a region in which the specific region is displayed from each of the two photographic images.

The sub-image generating means can be caused to individually generate a plurality of first sub-images by cropping the region in which the specific region is displayed individually from a plurality of the photographic images which have been consecutively captured and which include one of the two photographic images, and to individually generate a plurality of second sub-images by cropping the region in which the specific region is displayed individually from a plurality of the photographic images which have been consecutively captured and which include the other of the two photographic images.

The image processing apparatus can further include display control means for causing a plurality of image pairs, each of which is formed of the first sub-image and the second sub-image, to be displayed in sequence at certain time intervals so that the specific region is stereoscopically displayed by simultaneously displaying the image pairs.

The image processing apparatus can further include panoramic image generating means for generating a panoramic image in which a region including the specific region to be captured is displayed, by arranging side by side and combining individual strip images obtained by cropping a certain region from the plurality of the photographic images, and for generating another panoramic image by arranging side by side and combining individual other strip images obtained by cropping a region at a position to which the certain region is shifted in a specific direction opposite to a direction corresponding to a movement direction of the image capturing means from the plurality of the photographic images. The specifying means can be caused to determine a magnitude of the parallax of the subject in the specific region by detecting movement in each region in the panoramic image by performing motion estimation using the panoramic image and the other panoramic image, and to, in a case where the parallax of the subject in the specific region has the predetermined magnitude, use, as the two photographic images, the photographic images respectively used for generation of the panoramic image and the other panoramic image in which the subject in the specific region is displayed.

The specifying means can be caused to identify the magnitude of the parallax as the predetermined magnitude in a case where a relative magnitude of a largest movement in the specific direction within the specific region with respect to a magnitude of a movement in the direction corresponding to the movement direction, which has been detected most frequently, is the predetermined magnitude.

An image processing method or a program in an aspect of the present invention is an image processing method or a program for generating, based on a plurality of photographic images obtained by image capturing using image capturing means while moving the image capturing means, a first sub-image and a second sub-image having a parallax from each other in which a specific region to be captured when the photographic images are captured is displayed, and includes the steps of specifying two photographic images between which a parallax of a subject in the specific region has a predetermined magnitude among a plurality of the photographic images in which the specific region is displayed, by performing motion estimation utilizing the photographic images; and generating the first sub-image and the second sub-image by cropping a region in which the specific region is displayed from each of the two photographic images.

In an aspect of the present invention, in a case where, based on a plurality of photographic images obtained by image capturing using image capturing means while moving the image capturing means, a first sub-image and a second sub-image having a parallax from each other in which a specific region to be captured when the photographic images are captured is displayed is generated, two photographic images between which a parallax of a subject in the specific region has a predetermined magnitude is specified by motion estimation utilizing the photographic images among the plurality of photographic images in which the specific region is displayed, and the first sub-image and the second sub-image are generated by cropping a region in which the specific region is displayed from each of the two photographic images.

### Advantageous Effects of Invention

According to an aspect of the present invention, it is possible to obtain a stereoscopic image having a more appropriate parallax.

### Brief Description of Drawings

[Fig. 1] Fig. 1 is a diagram describing the way photographic images are captured.
[Fig. 2] Fig. 2 is a diagram describing parallax during the capture of images.
[Fig. 3] Fig. 3 is a diagram illustrating a display example of a stereoscopic panoramic moving image.
[Fig. 4] Fig. 4 is a diagram illustrating an example configuration of an embodiment of an image capture apparatus to which the present invention is applied.
[Fig. 5] Fig. 5 is a diagram illustrating an example configuration of a signal processing unit.
[Fig. 6] Fig. 6 is a flowchart describing a moving image reproducing process.
[Fig. 7] Fig. 7 is a diagram describing position alignment of photographic images.
[Fig. 8] Fig. 8 is a diagram describing the calculation of center coordinates.
[Fig. 9] Fig. 9 is a flowchart describing a stereoscopic panoramic moving image reproducing process.
[Fig. 10] Fig. 10 is a diagram describing the cropping of strip images.
[Fig. 11] Fig. 11 is a diagram describing the generation of a panoramic moving image.
[Fig. 12] Fig. 12 is a flowchart describing a stereoscopic sub-moving image reproducing process.
[Fig. 13] Fig. 13 is a diagram describing the generation of a stereoscopic sub-moving image.
[Fig. 14] Fig. 14 is a diagram illustrating an example configuration of a computer.

### Description of Embodiments

An embodiment to which the present invention is applied will be described hereinafter with reference to the drawings.

### [Description of Stereoscopic Panoramic Moving Image]

An image capture apparatus to which the present invention is applied is formed of, for example, a camera or the like, and generates a single stereoscopic panoramic moving image from a plurality of photographic images continuously captured by the image capture apparatus in a state where the image capture apparatus is moving. The stereoscopic panoramic moving image is composed of two panoramic moving images having a parallax.

A panoramic moving image is an image group having a plurality of panoramic images in which a region in a wider range than the image capture range (angle of view) in the real space within which an image capture apparatus can capture an image in single image capture is displayed as a subject. Therefore, a panoramic moving image can be regarded as being a single moving image if each of the panoramic images constituting the panoramic moving image is considered an image of one frame, or can also be regarded as being a still image group if each of the panoramic images constituting the panoramic moving image is considered a single still image. Hereinafter, for ease of description, the description will continue assuming that a panoramic moving image is a moving image.

In a case where a user wishes to cause an image capture apparatus to generate a stereoscopic panoramic moving image, the user operates the image capture apparatus to capture photographic images used for the generation of the stereoscopic panoramic moving image.

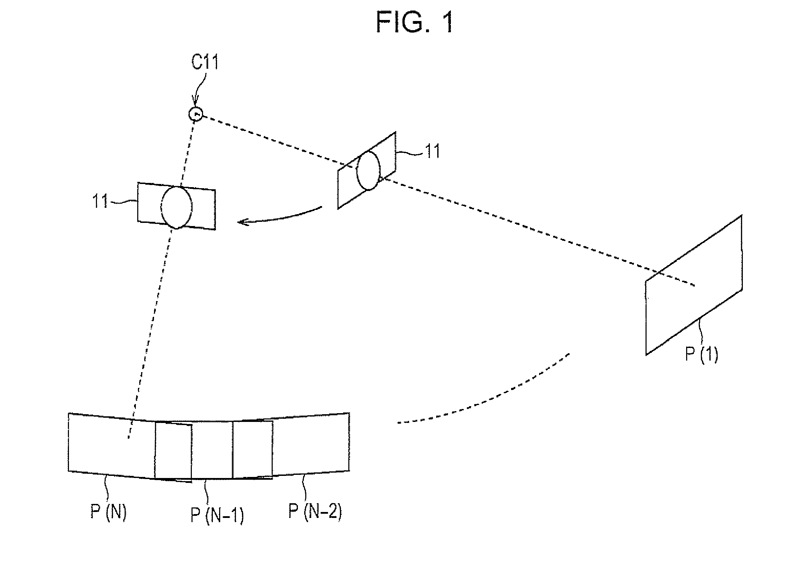

For example, as illustrated in Fig. 1, during the capture of photographic images, the user causes an image capture apparatus 11 to continuously capture images of a subject while turning (panning) the image capture apparatus 11 from right to left in the figure around a center of turn C11 with an optical lens of the image capture apparatus 11 directed toward the front in the figure. At this time, the user adjusts the turning speed of the image capture apparatus 11 so that the same stationary subject is included in a plurality of photographic images to be continuously captured.

Capturing photographic images while moving the image capture apparatus 11 in the above manner results in the obtainment of N photographic images P(1) to P(N).

Here, the photographic image P(1) is the photographic image having the oldest capture time among the N photographic images, that is, the first captured image, and the photographic image P(N) is the photographic image having the latest capture time, or the last captured image, among the N photographic images. Hereinafter, the n-th (where 1 ≤ n ≤ N) captured photographic image is also referred to as the photographic image P(n).

Note that each of the photographic images may be a continuously shot still image or an image of one frame in a photographed moving image.

Additionally, in a case where a photographic image that is longer in the vertical direction in the figure can be obtained by capturing an image with the image capture apparatus 11 itself rotated by 90 degrees in Fig. 1, that is, with the image capture apparatus 11 being in a landscape orientation, photographic images may be captured with the image capture apparatus 11 being in a landscape orientation. In such a case, a stereoscopic panoramic moving image is generated in which photographic images are rotated by 90 degrees in the same direction as the image capture apparatus 11.

When N photographic images are obtained in the above manner, the image capture apparatus 11 generates two panoramic moving images having a parallax from each other using these photographic images. Here, a panoramic moving image is a moving image in which an entire region in the image capture area to be captured when the N photographic images are captured is displayed as a subject.

Two panoramic moving images having a parallax are obtained from photographic images because a plurality of photographic images are captured in a state where the image capture apparatus 11 is moving and thus the subject in these photographic images has a parallax.

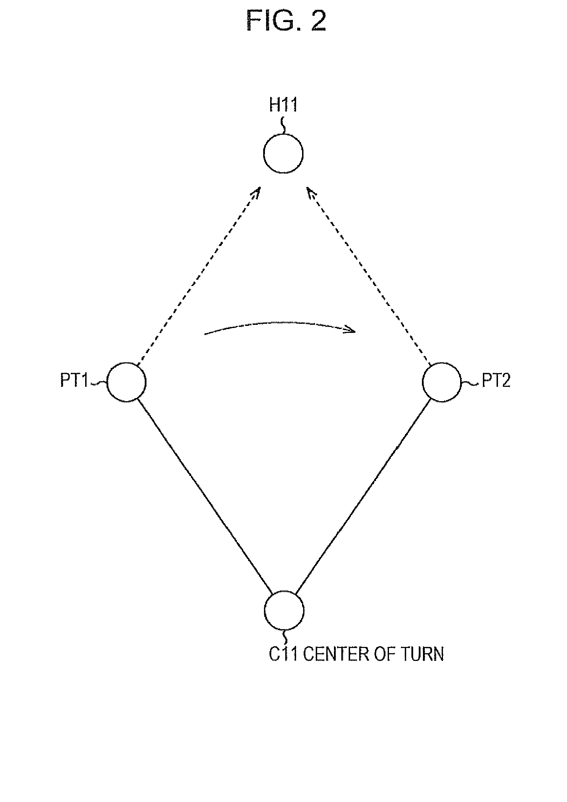

For example, as illustrated in Fig. 2, it is assumed that when photographic images were captured while turning the image capture apparatus 11 in the arrow direction in the figure around the center of turn C11, photographic images were captured at a position PT1 and a position PT2.

In this case, photographic images captured when the image capture apparatus 11 is at the position PT1 and the position PT2 include the same subject H11. However, the positions at which these photographic images were captured, that is, the observation positions of the subject H11, are different, thus causing parallax. In a case where the image capture apparatus 11 is turned at a constant turning speed, the longer the distance from the center of turn C11 to the image capture apparatus 11 is, for example, the longer the distance from the center of turn C11 to the position PT1 is, the larger the parallax becomes.

Two panoramic moving images having different observation positions (having a parallax) are generated using the parallax caused in the above manner, and these panoramic moving images are simultaneously reproduced by using the lenticular method or the like. Thus, a stereoscopic panoramic moving image can be presented to the user.

Note that, among two panoramic moving images constituting a stereoscopic panoramic moving image, a panoramic moving image displayed so as to be observed by the right eye of the user is hereinafter referred to as a right-eye panoramic moving image. Further, among two panoramic moving images constituting a stereoscopic panoramic moving image, a panoramic moving image displayed so as to be observed by the left eye of the user is referred to as a left-eye panoramic moving image.

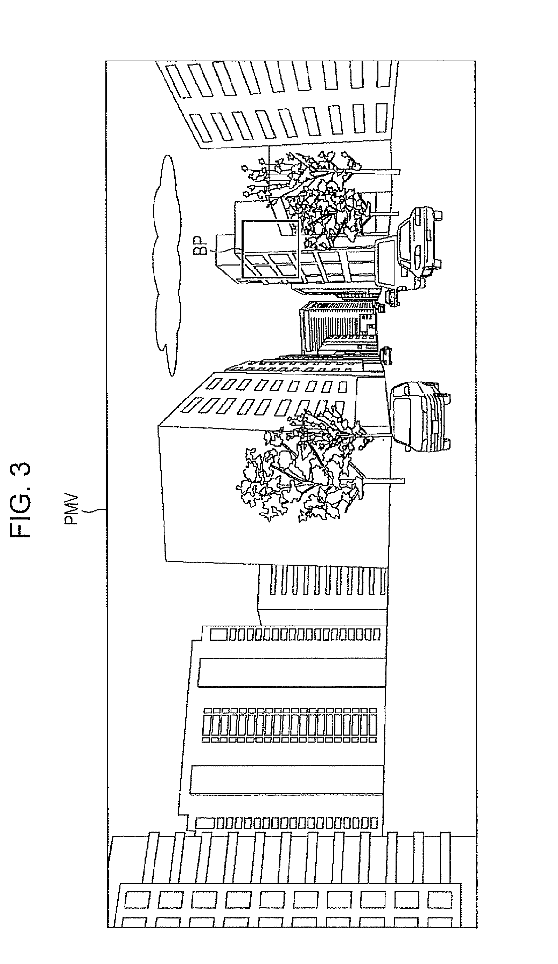

When a stereoscopic panoramic moving image is generated, for example, a stereoscopic panoramic moving image PMV illustrated in Fig. 3 is displayed on the image capture apparatus 11. The user can specify a certain region in the displayed stereoscopic panoramic moving image PMV and a magnification to further display a new moving image in which the region is displayed on an enlarged scale with the specified magnification.

For example, when the user specifies an arbitrary position in the stereoscopic panoramic moving image PM and a magnification V, a stereoscopic sub-moving image in which only a region BP in the stereoscopic panoramic moving image PMV, which is centered around the specified position and which is defined by the specified magnification, is used as a subject is displayed on the image capture apparatus 11. That is, a process for causing a stereoscopic sub-moving image to be displayed is a process for causing a region that is a portion of the stereoscopic panoramic moving image to be displayed on an enlarged scale.

### [Configuration of Image Capture Apparatus]

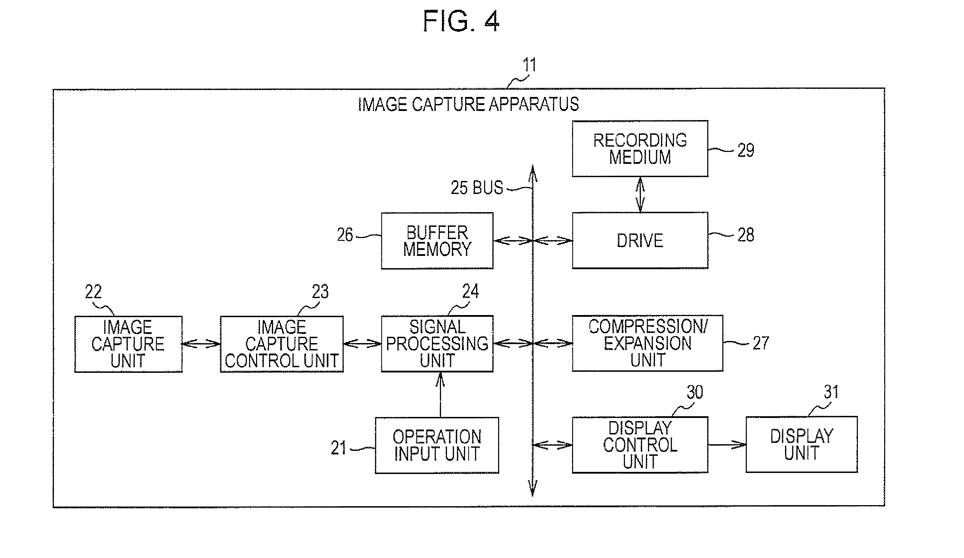

Fig. 4 is a diagram illustrating an example configuration of an embodiment of the image capture apparatus 11 to which the present invention is applied.

The image capture apparatus 11 is constituted by an operation input unit 21, an image capture unit 22, an image capture control unit 23, a signal processing unit 24, a bus 25, a buffer memory 26, a compression/expansion unit 27, a drive 28, a recording medium 29, a display control unit 30, and a display unit 31.

The operation input unit 21 is formed of buttons and the like. In response to an operation of a user, the operation input unit 21 supplies a signal corresponding to the operation to the signal processing unit 24. The image capture unit 22 is formed of an optical lens, an image capture element, and the like. The image capture unit 22 performs photoelectric conversion of light from a subject to capture a photographic image, and supplies the photographic image to the image capture control unit 23. The image capture control unit 23 controls the image capture operation performed by the image capture unit 22, and, in addition, supplies the photographic image obtained from the image capture unit 22 to the signal processing unit 24.

The signal processing unit 24 is connected to the buffer memory 26 to the drive 28 and the display control unit 30 via the bus 25, and controls the entirety of the image capture apparatus 11 in accordance with a signal from the operation input unit 21.

For example, the signal processing unit 24 supplies the photographic image obtained from the image capture control unit 23 to the buffer memory 26 via the bus 25, or generates a stereoscopic panoramic moving image from photographic images acquired from the buffer memory 26. Additionally, the signal processing unit 24 also generates a stereoscopic sub-moving image from the photographic images acquired from the buffer memory 26.

The buffer memory 26 is formed of an SDRAM (Synchronous Dynamic Random Access Memory) or the like, and temporarily records data of photographic images and the like supplied via the bus 25. The compression/expansion unit 27 encodes or decodes the image supplied via the bus 25 using a certain method.

The drive 28 causes the stereoscopic panoramic moving image supplied via the bus 25 to be recorded on the recording medium 29, or reads a stereoscopic panoramic moving image recorded on the recording medium 29 and outputs the panoramic moving image to the bus 25. The recording medium 29 is formed of a non-volatile memory or the like that is removably attached to the image capture apparatus 11, and records a stereoscopic panoramic moving image in accordance with the control of the drive 28.

The display control unit 30 supplies the stereoscopic panoramic moving image supplied via the bus 25 and the like to the display unit 31 for display. The display unit 31 is formed of, for example, an LCD (Liquid Crystal Display) or a lenticular lens, and stereoscopically displays an image using the lenticular method in accordance with the control of the display control unit 30.

### [Configuration of Signal Processing Unit]

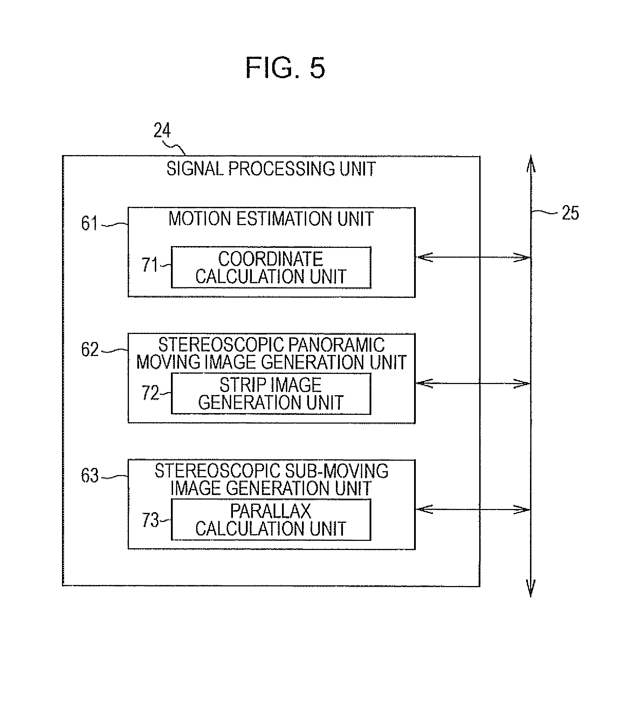

Furthermore, more specifically, the signal processing unit 24 in Fig. 4 is configured as illustrated in Fig. 5.

That is to say, the signal processing unit 24 is constituted by a motion estimation unit 61, a stereoscopic panoramic moving image generation unit 62, and a stereoscopic sub-moving image generation unit 63.

The motion estimation unit 61 performs motion estimation using two photographic images having different capture times, which are supplied via the bus 25. The motion estimation unit 61 includes a coordinate calculation unit 71.

The coordinate calculation unit 71 generates, based on the motion estimation result, information indicating the relative positional relationship between the two photographic images when these photographic images are placed so as to be arranged side by side in a certain plane so that the same subject appears in the photographic images in an overlapping manner. Specifically, the coordinates of the position of the center (hereinafter referred to as center coordinates) of a photographic image when the two-dimensional xy coordinate system is plotted on a certain plane are calculated as information indicating the relative positional relationship between photographic images.

The stereoscopic panoramic moving image generation unit 62 generates a stereoscopic panoramic moving image using the photographic images and center coordinates supplied via the bus 25. The stereoscopic panoramic moving image generation unit 62 includes a strip image generation unit 72.

The strip image generation unit 72 generates right-eye and left-eye strip images by cropping a certain region from the photographic images using the photographic images and the center coordinates. The stereoscopic panoramic moving image generation unit 62 combines the generated right-eye and left-eye strip images to generate right-eye and left-eye panoramic images. Additionally, the stereoscopic panoramic moving image generation unit 62 generates right-eye and left-eye panoramic moving images that are panoramic image groups by generating a plurality of right-eye panoramic images and a plurality of left-eye panoramic images.

Here, a panoramic moving image of one frame, that is, one panoramic image, is an image in which an entire range (region) in the image capture area to be captured when the photographic images are captured is displayed as a subject.

The stereoscopic sub-moving image generation unit 63 generates a stereoscopic sub-moving image using the photographic images and center coordinates supplied via the bus 25. The stereoscopic sub-moving image is constituted by a plurality of sub-images that are images in which only a certain region in the stereoscopic panoramic moving image is displayed.

Additionally, the stereoscopic sub-moving image generation unit 63 includes a parallax calculation unit 73. The parallax calculation unit 73 specifies a photographic image group suitable for generating a stereoscopic sub-moving image by performing motion estimation using panoramic images of two frames constituting a panoramic moving image.

The stereoscopic sub-moving image generation unit 63 generates, using the photographic images specified by the parallax calculation unit 73 and the center coordinates, right-eye and left-eye sub-images by cropping a certain region in the photographic images, thereby generating right-eye and left-eye sub-moving images that are sub-image groups. A single stereoscopic sub-moving image is constituted by these right-eye and left-eye sub-moving images.

### [Description of Moving Image Reproduction Process]

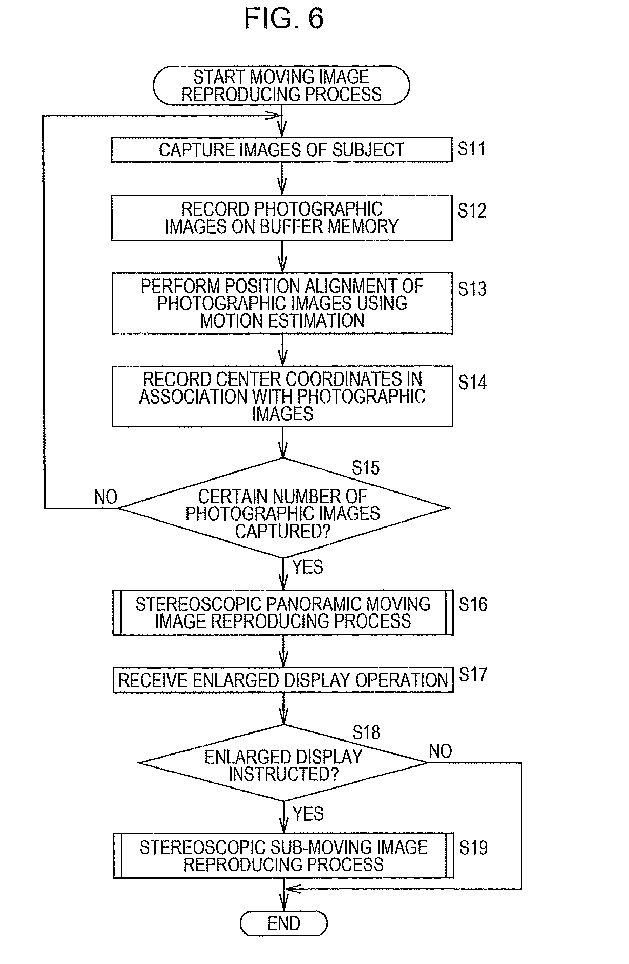

Next, a moving image reproducing process in which the image capture apparatus 11 captures photographic images to generate various moving images such as a stereoscopic panoramic moving image and reproduces these moving images will be described with reference to a flowchart of Fig. 6. The moving image reproducing process is started when a user operates the operation input unit 21 and instructs generation of a stereoscopic panoramic moving image.

In step S11, the image capture unit 22 captures an image of a subject in a state where, as illustrated in Fig. 1, the image capture apparatus 11 is moving. Thereby, a single (hereinafter referred to as one frame) photographic image is obtained. The photographic image captured by the image capture unit 22 is supplied from the image capture unit 22 to the signal processing unit 24 via the image capture control unit 23.

In step S12, the signal processing unit 24 supplies the photographic image supplied from the image capture unit 22 to the buffer memory 26 via the bus 25 for temporary recording. At this time, the signal processing unit 24 records the photographic image which is assigned a frame number in order to specify when a photographic image to be recorded was captured. Note that the n-th captured photographic image P(n) is hereinafter also referred to as the photographic image P(n) of frame n.

In step S13, the motion estimation unit 61 acquires the photographic images of the current frame n and the preceding frame (n-1) from the buffer memory 26 via the bus 25, and performs position alignment of the photographic images by motion estimation.

For example, in a case where the photographic image recorded on the buffer memory 26 in immediately preceding step S12 is the n-th captured photographic image P(n), the motion estimation unit 61 acquires the photographic image P(n) of the current frame n and the photographic image P(n-1) of the preceding frame (n-1).

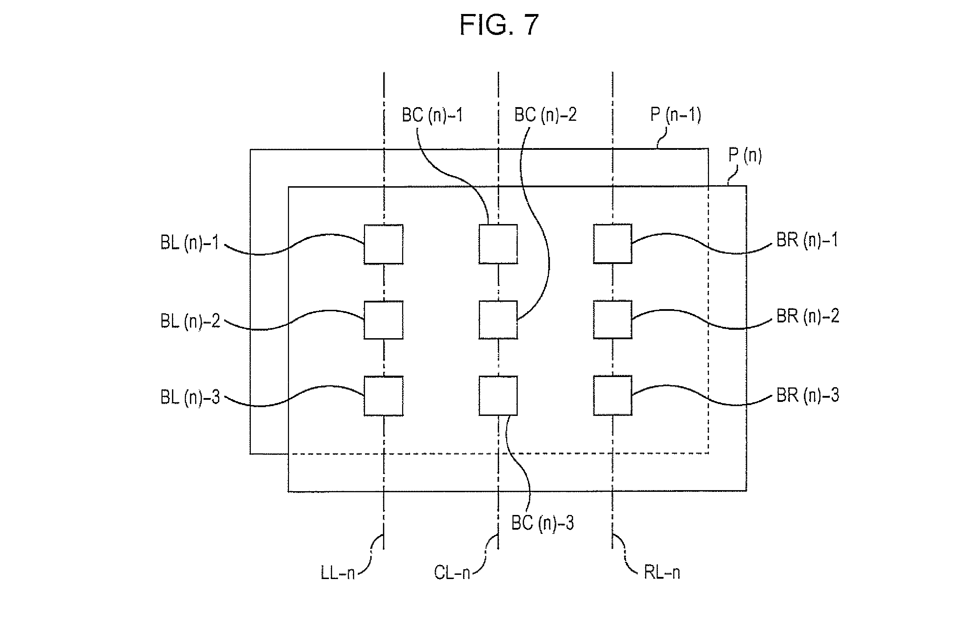

Then, as illustrated in Fig. 7, the motion estimation unit 61 performs position alignment by searching for which positions in the photographic image P(n-1) of the preceding frame the same images as those of nine blocks BL(n)-1 to BR(n)-3 in the photographic image P(n) are located at.

Here, the blocks BC(n)-1 to BC(n)-3 are rectangular regions arranged side by side vertically in the figure along a boundary CL-n that is an imaginary straight line extending vertically in the figure, which is located substantially at the center of the photographic image P(n).

Additionally, the blocks BL(n)-1 to BL(n)-3 are rectangular regions arranged side by side vertically in the figure along a boundary LL-n that is an imaginary straight line extending vertically in the figure, which is located on the left side of the boundary CL-n in the photographic image P(n). Similarly, the blocks BR(n)-1 to BR(n)-3 are rectangular regions arranged side by side vertically in the figure along a boundary RL-n that is an imaginary straight line extending vertically in the figure, which is located on the right side of the boundary CL-n in the photographic image P(n). The positions of the nine blocks BL(n)-1 to BR(n)-3 are determined in advance.

The motion estimation unit 61 searches for, for each of the nine blocks in the photographic image P(n), a region that is in the photographic image P(n-1) having the same shape and size as the block and that has the smallest difference from the block (the region is hereinafter referred to as a block corresponding region). Here, it is assumed that the difference from a block is the sum of absolute difference values between pixel values of pixels at the same positions in the block to be processed, for example, the block BL(n)-1, and a region regarded as a candidate block corresponding region.

The above motion estimation results in the obtainment of, for each of the blocks BL(n)-1 to BR(n)-3 in the photographic image P(n), a block corresponding region positioned in the photographic image P(n-1) with the same positional relationship as the relative positional relationship between these blocks.

A block corresponding region in the photographic image P(n-1), which corresponds to the block to be processed in the photographic image P(n), is a region having the smallest difference from the block to be processed in the photographic image P(n-1). For this reason, it is estimated that the same image as that of the block to be processed is displayed in the block corresponding region.

Therefore, arranging the photographic image P(n) and the photographic image P(n-1) side by side so as to overlap in a certain plane in such a manner that the blocks BL(n)-1 to BR(n)-3 overlap the corresponding block corresponding regions would result in the same subject in the photographic images appearing in an overlapping manner.

However, actually, in some cases, a block and a block corresponding region may not necessarily have completely the same positional relationship. For this reason, more specifically, the motion estimation unit 61 arranges the photographic image P(n) and the photographic image P(n-1) side by side in a plane so that all the blocks substantially overlap block corresponding regions, and uses the result as the result of the position alignment of the photographic images.

Note that in a case where a moving subject appears in a photographic image and the subject is included in a block in the photographic image P(n), the obtained nine block corresponding regions do not have the same positional relationship as the blocks BL(n)-1 to BR(n)-3.

Thus, in a case where the obtained relative positional relationship between the block corresponding regions is different from the relative positional relationship between the blocks in the photographic image P(n), the motion estimation unit 61 excludes a block that is estimated to include a moving subject, and again performs position alignment based on motion estimation. That is, a block corresponding region having a different relative positional relationship from the other block corresponding regions is detected, the block in the photographic image P(n), which corresponds to the detected block corresponding region, is excluded from the target to be processed, and motion estimation is performed again using only the remaining blocks.

Specifically, it is assumed that the blocks BL(n)-1 to BR(n)-3 are arranged side by side vertically and horizontally in Fig. 7 at an equal interval with the interval being a distance QL. For example, the distance between the block BL(n)-1 and the block BL(n)-2, which are adjacent, and the distance between the block BL(n)-1 and the block BC(n)-1, which are adjacent, are QL. In this case,
the motion estimation unit 61 detects a block including motion in the photographic image P(n) on the basis of the relative positional relationship between the block corresponding regions corresponding to the respective blocks.

That is to say, the motion estimation unit 61 determines a distance QM between adjacent block corresponding regions, such as that between the block corresponding region corresponding to the block BR(n)-3 and the block corresponding region corresponding to the block BC(n)-3.

Consequently, for the block BR(n)-2 and the block BC(n)-3, it is assumed that the absolute value of the difference between the distance QM, which is between the block corresponding regions corresponding to these blocks and the block corresponding region corresponding to the block BR(n)-3, and the distance QL is greater than or equal to a predetermined threshold value.

Additionally, it is assumed that the absolute value of the difference between the distance QM, which is between the block corresponding regions corresponding to the blocks BR(n)-2 and BC(n)-3 and other adjacent block corresponding regions (excluding the block corresponding region of the block BR(n)-3), and the distance QL is less than the predetermined threshold value.

In this case, the block corresponding regions of other blocks different from the block BR(n)-3 are arranged side by side with the same positional relationship as the relative positional relationship between the respective blocks. However, the positional relationship between only the block corresponding region of the block BR(n)-3 and other block corresponding regions is different from the positional relationship between the respective blocks. In a case where such a detection result is obtained, the motion estimation unit 61 determines that the block BR(n)-3 includes a moving subject.

Note that the detection of a block including motion may be performed not only using the distance between adjacent block corresponding regions but also using the rotation angle of the block corresponding region of interest with respect to another adjacent block corresponding region and the like. That is, for example, if there is a block corresponding region inclined by a certain angle or more with respect to other block corresponding regions, it is determined that the block corresponding to the block corresponding region includes a moving subject.

When a block including motion is detected in the above manner, the motion estimation unit 61 performs motion estimation using remaining blocks except for the block including motion to again perform position alignment between the photographic image P(n) and the photographic image P(n-1).

In this manner, position alignment using only a block including a non-moving subject, that is, only including the so-called background, except for a block including a moving subject, enables more accurate position alignment. The photographic image P(n) and the photographic image P(n-1) are arranged side by side in accordance with the result of the position alignment, thus allowing these photographic images to be arranged side by side so as to overlap in such a manner that a non-moving subject appears in an overlapping manner.

When position alignment is performed, then, the coordinate calculation unit 71 calculates the center coordinates of the photographic image P(n) when the previously captured photographic images P(1) to P(n) are arranged side by side in a certain plane, that is, in the xy coordinate system, in accordance with the result of the position alignment of each frame.

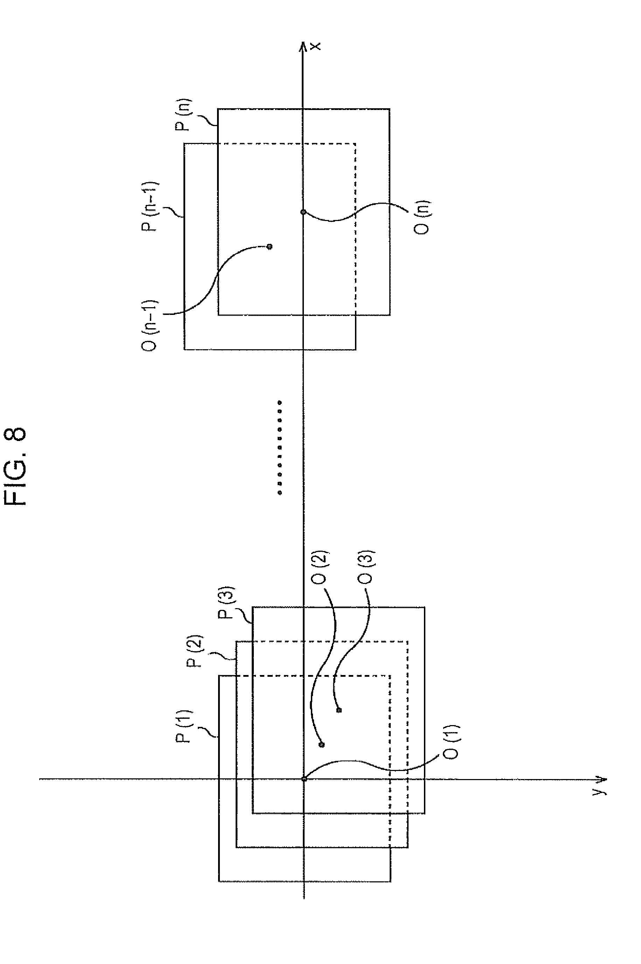

For example, as illustrated in Fig. 8, individual photographic images are arranged side by side so that the center of the photographic image P(1) is located at the origin of the xy coordinate system and so that the same subject included in the photographic images appears in an overlapping manner. Note that in the figure, the horizontal direction represents the x direction and the vertical direction represents the y direction. Additionally, respective points O(1) to O(n) in the photographic images P(1) to P(n) represent the positions of the centers of the corresponding photographic images.

For example, if it is assumed that the photographic image of the current frame to be processed is the photographic image P(n), the center coordinates of the points O(1) to O(n-1) at the center of the photographic images P(1) to P(n-1) have already been determined and recorded on the buffer memory 26.

The coordinate calculation unit 71 reads the center coordinates of the photographic image P(n-1) from the buffer memory 26, and determines the center coordinates of the photographic image P(n) from the read center coordinates and the result of the position alignment between the photographic image P(n) and the photographic image P(n-1). That is, the x coordinate and y coordinate of the point O(n) are determined as the center coordinates.

Referring back to the description of the flowchart of Fig. 6, in step S13, position alignment is performed, and the center coordinates of the photographic image P(n) are determined. Then, the process proceeds to step S14.

In step S14, the motion estimation unit 61 supplies the obtained center coordinates of the photographic image P(n) to the buffer memory 26, and records the center coordinates in association with the photographic image P(n).

In step S15, the signal processing unit 24 determines whether or not a predetermined certain number of photographic images have been captured. For example, as illustrated in Fig. 1, in a case where a region in a certain area is captured individually N times, it is determined that the certain number of photographic images have been captured when N photographic images are captured.

Note that in a case where the image capture apparatus 11 is provided with a device capable of detecting an angle at which the image capture apparatus 11 is turned, such as a gyro sensor, instead of determining the number of photographic images captured, it may be determined whether or not the image capture apparatus 11 has been turned by a certain angle since the start of the capture of photographic images. Even in this case, it can be specified whether or not the capture of photographic images in which the entirety of a specific region in a certain area is set as a subject has been performed.

In a case where it is determined in step S15 that the certain number of photographic images have not yet been captured, the process returns to step S11, and the photographic image of the next frame is captured.

On the other hand, in a case where it is determined in step S15 that the certain number of photographic images have been captured, the process proceeds to step S16.

In step S16, the image capture apparatus 11 performs a stereoscopic panoramic moving image reproducing process. That is to say, the signal processing unit 24 acquires photographic images and center coordinates from the buffer memory 26, and generates two panoramic moving images having a parallax on the basis of these photographic images and the center coordinates. Additionally, the display control unit 30 reproduces the generated two panoramic moving images, that is to say, a stereoscopic panoramic moving image, and causes the display unit 31 to display pairs of right-eye and left-eye panoramic images in sequence. Note that the details of the stereoscopic panoramic moving image reproducing process will be described below.

In step S17, the signal processing unit 24 receives an operation for instructing enlarged display of a region that is a portion of a stereoscopic panoramic moving image currently being reproduced, that is, reproduction of a stereoscopic sub-moving image.

When the reproduction of a stereoscopic panoramic moving image is started, for example, the stereoscopic panoramic moving image illustrated in Fig. 3 is displayed on the display unit 31. Then, the user operates the operation input unit 21 in accordance with necessity, and instructs reproduction of a stereoscopic sub-moving image by performing an operation such as specifying a desired position in the displayed stereoscopic panoramic moving image and a magnification for enlargement. When the user performs an operation, a signal corresponding to the operation is supplied from the operation input unit 21 to the signal processing unit 24.

In step S18, the signal processing unit 24 determines whether or not enlarged display of a region that is a portion of the stereoscopic panoramic moving image has been instructed on the basis of the signal from the operation input unit 21.

In a case where it is determined in step S18 that enlarged display has been instructed, in step S19, the image capture apparatus 11 performs a stereoscopic sub-moving image reproducing process, and the moving image reproducing process ends. That is to say, a stereoscopic sub-moving image is generated on the basis of photographic images and center coordinates recorded on the buffer memory 26, and the generated stereoscopic sub-moving image is reproduced. Note that the details of the stereoscopic sub-moving image reproducing process will be described below.

On the other hand, in a case where it is determined in step S18 that enlarged display has not been instructed, the moving image reproducing process ends when the reproduction of the stereoscopic panoramic moving image displayed on the display unit 31 is completed.

In the above manner, the image capture apparatus 11 generates a stereoscopic panoramic moving image using a plurality of photographic images captured at different times, and reproduces it. Additionally, when the user instructs enlarged display of a region that is a portion of the stereoscopic panoramic moving image during the reproduction of the stereoscopic panoramic moving image, the image capture apparatus 11 generates a stereoscopic sub-moving image in which the instructed region is displayed, and reproduces it.

### [Description of Stereoscopic Panoramic Moving Image Reproduction Process]

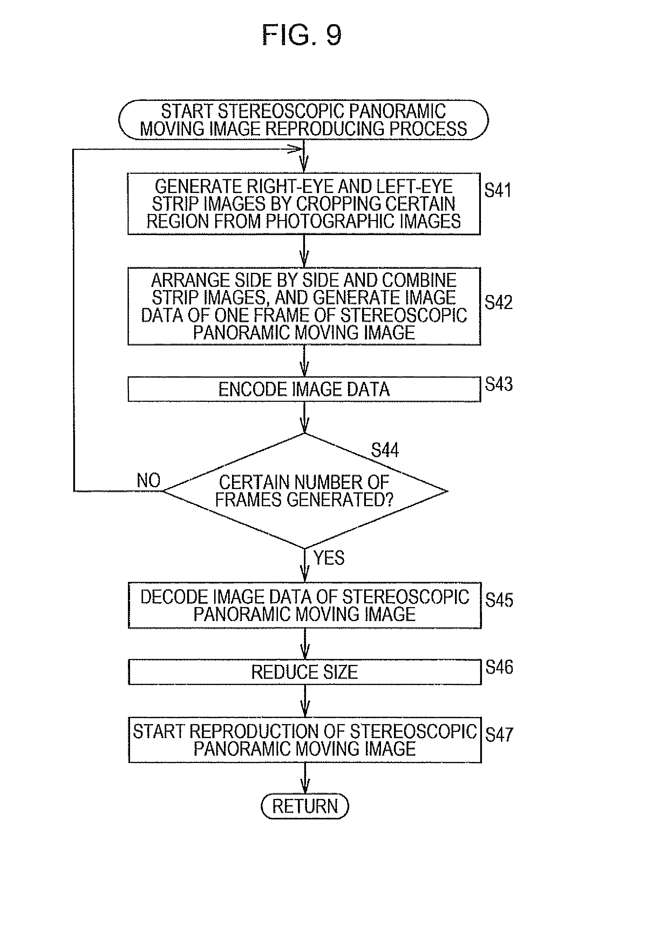

Next, a stereoscopic panoramic moving image reproducing process corresponding to the processing of step S16 in Fig. 6 will be described with reference to a flowchart of Fig. 9.

In step S41, the strip image generation unit 72 acquires N photographic images and their center coordinates from the buffer memory 26 and generates right-eye and left-eye strip images by cropping a certain region from the respective photographic images on the basis of the acquired photographic images and center coordinates.

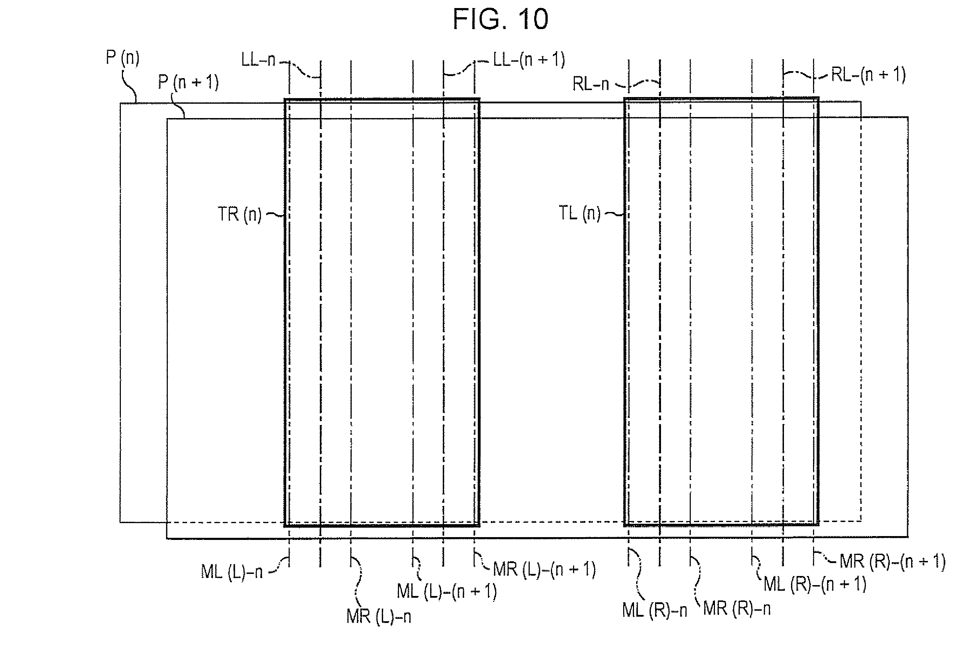

For example, as illustrated in Fig. 10, the strip image generation unit 72 sets a region defined using as a reference a boundary LL-n in the photographic image P(n) as a cropped region TR(n), and crops the cropped region TR(n) to produce a right-eye strip image. Additionally, the strip image generation unit 72 sets a region defined using as a reference a boundary RL-n in the photographic image P(n) as a cropped region TL(n), and crops the cropped region TL(n) to produce a left-eye strip image. Note that in Fig. 10, portions corresponding to those in the case illustrated in Fig. 7 are assigned the same numerals and the descriptions thereof are omitted.

In Fig. 10, the photographic image P(n) and the photographic image P(n+1), which have been successively captured, are arranged side by side so that the same subject appears in an overlapping manner on the basis of the center coordinates of the images. A boundary LL-(n+1) in the photographic image P(n+1) is a boundary corresponding to the boundary LL-n in the photographic image P(n), That is, the boundary LL-n and the boundary LL-(n+1) are imaginary straight lines extending vertically in the figure which are located at the same position in the photographic image P(n) and the photographic image P(n+1), respectively.

Similarly, a boundary RL-(n+1) in the photographic image P(n+1), which is a straight line extending vertically in the figure, is a boundary corresponding to the boundary RL-n in the photographic image P(n).

Additionally, a boundary ML(L)-n and a boundary MR(L)-n, which are straight lines extending vertically in the figure, are straight lines located in the vicinity of the boundary LL-n in the photographic image P(n), and are positioned apart by a predetermined distance to the left and right of the boundary LL-n, respectively.

Similarly, a boundary ML(L)-(n+1) and a boundary MR(L)-(n+1), which are straight lines extending vertically in the figure, are straight lines located in the vicinity of the boundary LL-(n+1) in the photographic image P(n+1), and are positioned apart by a predetermined distance to the left and right of the boundary LL-(n+1), respectively.

Further, a boundary ML(R)-n and a boundary MR(R)-n, which are straight lines extending vertically in the figure, are straight lines located in the vicinity of the boundary RL-n in the photographic image P(n), and are positioned apart by a predetermined distance to the left and right of the boundary RL-n, respectively. Similarly, a boundary ML(R)-(n+1) and a boundary MR(R)-(n+1), which are straight lines extending vertically in the figure, are straight lines located in the vicinity of the boundary RL-(n+1) in the photographic image P(n+1), and are positioned apart by a predetermined distance to the left and right of the boundary RL-(n+1), respectively.

For example, in the case of cropping a right-eye strip image from the photographic image P(n), the strip image generation unit 72 crops as a right-eye strip image the cropped region TR(n) extending from the boundary ML(L)-n to the position of the boundary MR(L)-(n+1) in the photographic image P(n). Here, the position of the boundary MR(L)-(n+1) in the photographic image P(n) is the position in the photographic image P(n), which overlaps the boundary MR(L)-(n+1) when the photographic image P(n) and the photographic image P(n+1) are arranged side by side. Additionally, the right-eye strip image cropped from the photographic image P(n) of frame n is also hereinafter referred to as a strip image TR(n).

Similarly, in a case where a right-eye strip image is cropped from the photographic image P(n-1), a cropped region TR(n-1) extending from a boundary ML(L)-(n-1) to the position of the boundary MR(L)-n in the photographic image P(n-1) is cropped as a right-eye strip image.

Therefore, a subject in the region extending from the boundary ML(L)-n to the position of the boundary MR(L)-n in the strip image TR(n) is basically the same as a subject in the region extending from the boundary ML(L)-n to the position of the boundary MR(L)-n in the strip image TR(n-1). It is noted that since the strip image TR(n) and the strip image TR(n-1) are images cropped from the photographic image P(n) and the photographic image P(n-1), respectively, the times at which images of even the same subject were captured are different.

Similarly, a subject in the region extending from the boundary ML(L)-(n+1) to the position of the boundary MR(L)-(n+1) in the strip image TR(n) is basically the same as a subject in the region extending from the boundary ML(L)-(n+1) to the position of the boundary MR(L)-(n+1) in the strip image TR(n+1).

Additionally, for example, in the case of cropping a left-eye strip image from the photographic image P(n), the strip image generation unit 72 crops as a left-eye strip image the cropped region TL(n) extending from the boundary ML(R)-n to the position of the boundary MR(R)-(n+1) in the photographic image P(n). Here, the position of the boundary MR(R)-(n+1) in the photographic image P(n) is the position in the photographic image P(n), which overlaps the boundary MR(R)-(n+1) when the photographic image P(n) and the photographic image P(n+1) are arranged side by side. Additionally, the left-eye strip image cropped from the photographic image P(n) of frame n is also hereinafter referred to as a strip image TL(n).

In this manner, regions defined using as references boundaries positioned to the left from the center of a photographic image in the figure are cropped from the photographic image to produce right-eye strip images, and these strip images are arranged side by side. Thus, an entire range (region) in the image capture area to be captured when N photographic images are captured is displayed. A single image obtained by arranging side by side and combining the right-eye strip images obtained from the individual photographic images serves as a panoramic image of one frame contained in a right-eye panoramic moving image.

Additionally, regions defined using as references boundaries positioned to the right from the center of a photographic image in the figure are cropped from the photographic image to produce left-eye strip images, and these strip images are arranged side by side. Thus, the entire range in the image capture area to be captured is displayed. A single image obtained by arranging side by side and combining the left-eye strip images serves as a panoramic image of one frame contained in a left-eye panoramic moving image.

Then, the same subject is displayed in these right-eye and left-eye panoramic images, and the subject in these images has parallax. For this reason, the right-eye and left-eye panoramic images are displayed simultaneously, thus allowing the user who observes these panoramic images to view the subject in the panoramic images in a stereoscopic manner.

Referring back to the description of the flowchart of Fig. 9, when right-eye and left-eye strip images are obtained from the photographic images, the process proceeds from step S41 to step S42.

In step S42, the stereoscopic panoramic moving image generation unit 62 arranges side by side and combines the strip images of the respective frames on the basis of the right-eye and left-eye strip images and the center coordinates of the photographic images, and generates image data of one frame in a stereoscopic panoramic moving image.

That is to say, the stereoscopic panoramic moving image generation unit 62 arranges side by side and combines right-eye strip images, and generates image data of one frame in the right-eye panoramic moving image. In addition, the stereoscopic panoramic moving image generation unit 62 arranges side by side and combines left-eye strip images, and generates image data of one frame in the left-eye panoramic moving image. The image data obtained in the above manner, that is, the right-eye panoramic image and the left-eye panoramic image, constitutes one frame of a stereoscopic panoramic moving image.

For example, before combining the strip image TR(n) and the strip image TR(n-1) in Fig. 10, the stereoscopic panoramic moving image generation unit 62 determines, for the region extending from the boundary ML(L)-n to the position of the boundary MR(L)-n in these strip images, pixel values of pixels of a panoramic image using weighted addition.

That is, if the strip image TR(n) and the strip image TR(n-1) are arranged side by side on the basis of the center coordinates, the region extending from the boundary ML(L)-n to the positions of the boundary MR(L)-n appears in an overlapping manner in these strip images. The stereoscopic panoramic moving image generation unit 62 performs weighted addition of the pixel values of the overlapping pixels in the strip image TR(n) and the strip image TR(n-1), and sets the resulting values as the pixel values of the pixels in the panoramic image at the positions corresponding to these pixels.

Note that the weights for the weighted addition of the pixels in the region extending from the boundary ML(L)-n to the position of the boundary MR(L)-n in the strip image TR(n) and the strip image TR(n-1) are defined so as to have the following features.

That is to say, the pixels at the positions from the boundary LL-n to the boundary MR(L)-n are designed so that the contribution ratio of the pixels in the strip image TR(n) for the generation of the panoramic image becomes higher as the positions of the pixels become closer to the position of the boundary MR(L)-n from the boundary LL-n. Conversely, the pixels at the positions from the boundary LL-n to the boundary ML(L)-n are designed so that the contribution ratio of the pixels in the strip image TR(n-1) for the generation of the panoramic image becomes higher as the positions of the pixels become closer to the position of the boundary ML(L)-n from the boundary LL-n.

Additionally, at the time of the generation of a panoramic image, with regard to the region extending from the boundary MR(L)-n to the boundary ML(L)-(n+1) in the strip image TR(n), the region is set directly as the panoramic image.

Further, at the time of the combination of the strip image TR(n) and the strip image TR(n+1), for the region extending from the boundary ML(L)-(n+1) to the position of the boundary MR(L)-(n+1) in these strip images, the pixel values of the pixels of the panoramic image are determined using weighted addition.

That is to say, the pixels at the positions from the boundary LL-(n+1) to the boundary MR(L)-(n+1) are designed so that the contribution ratio of the pixels in the strip image TR(n+1) for the generation of the panoramic image becomes higher as the positions of the pixels become closer to the position of the boundary MR(L)-(n+1) from the boundary LL-(n+1). Conversely, the pixels at the positions from the boundary LL-(n+1) to the boundary ML(L)-(n+1) are designed so that the contribution ratio of the pixels in the strip image TR(n) for the generation of the panoramic image becomes higher as the positions of the pixels become closer to the position of the boundary ML(L)-(n+1) from the boundary LL-(n+1).

Further, also in the combining of the left-eye strip image TL(n) and strip image TL(n-1) and in the combining of the strip image TL(n) and the strip image TL(n+1), similarly to the case of the strip image TR(n), weighted addition is performed on overlapping portions of these strip images.

In this way, before combination of strip images, regions in the vicinity of the edges of strip images of consecutive frames are subjected to weighted addition to produce the pixel values of pixels of a panoramic image. Thus, a more natural-looking image than in a case where strip images are merely arranged side by side to produce a single image can be obtained.

For example, in a case where a panoramic image is produced by merely arranging strip images side by side, the contour of a subject near the edges of the strip images may be distorted, or difference in brightness of strip images of consecutive frames may cause variation of brightness for each region of the panoramic image.

Thus, the stereoscopic panoramic moving image generation unit 62 combines regions in the vicinity of the edges of the strip images using weighted addition. This can prevent distortion of the contour of the subject or the occurrence of variation in brightness, resulting in the obtainment of a more natural-looking panoramic image.

Additionally, at the time of position alignment of photographic images, the motion estimation unit 61 may detect lens distortion caused by an optical lens included in the image capture unit 22 on the basis of the photographic images. At the time of combination of strip images, the strip image generation unit 72 may correct the strip images using the result of the detected lens distortion. That is to say, distortion caused in a strip image is corrected using image processing on the basis of the result of the detected lens distortion.

A stereoscopic panoramic moving image of one frame, which has been obtained in the manner as above is an image in which a region of an entire image capture range in the image capture area to be captured when the N photographic images are captured is displayed as a subject. When generating a stereoscopic panoramic moving image of one frame, the stereoscopic panoramic moving image generation unit 62 supplies image data of the generated stereoscopic panoramic moving image to the compression/expansion unit 27 via the bus 25.

In step S43, the compression/expansion unit 27 encodes the image data of the stereoscopic panoramic moving image supplied from the stereoscopic panoramic moving image generation unit 62 using, for example, the JPEG (Joint Photographic Experts Group) method, and supplies the resulting image data to the drive 28 via the bus 25.

The drive 28 supplies the image data of the stereoscopic panoramic moving image obtained from the compression/expansion unit 27 to the recording medium 29 to record it. At the time of recording of image data, the image data is assigned a frame number by the stereoscopic panoramic moving image generation unit 62.

In step S44, the signal processing unit 24 determines whether or not a predetermined certain number of frames of image data of the stereoscopic panoramic moving image have been generated. For example, in a case where the generation of a stereoscopic panoramic moving image formed of M frames of image data is defined, it is determined that stereoscopic panoramic moving images of the certain number of frames have been generated when M frames of image data are obtained.

In a case where it is determined in step S44 that stereoscopic panoramic moving images of the certain number of frames have not yet been generated, the process returns to step S41, and image data of the next frame of the stereoscopic panoramic moving image is generated.

For example, in a case where a right-eye panoramic image of the first frame of the stereoscopic panoramic moving image is generated, as described with reference to Fig. 10, a strip image is produced by cropping the cropped region TR(n) from the boundary ML(L)-n to the position of the boundary MR(L)-(n+1) in the photographic image P(n).

Then, in a case where right-eye panoramic images of the second and subsequent frames of the stereoscopic panoramic moving image are generated, the position of the cropped region TR(n) of a strip image from the photographic image P(n) is shifted to the left in Fig. 10 by an amount corresponding to a width CW from the boundary LL-n to the boundary LL-(n+1).

That is, it is assumed that the strip image of the m-th frame in the right-eye panoramic moving image is a strip image TR(n)-m (where 1 ≤ m ≤ M). In this case, the cropping position of the strip image TR(n)-m of the m-th frame is set to a position where the cropped region TR(n) at the cropping position of the strip image TR(n)-1 is shifted to the left in Fig. 10 by a distance that is (m-1) times the width CW.

Therefore, for example, a region from which the strip image TR(n)-2 of the second frame is to be cropped is set to a region that has the same shape and size as the cropped region TR(n) in Fig. 10 in the photographic image P(n) and that has the right edge located at the position of the boundary MR(L)-n.

Here, the direction in which a cropped region of a strip image is to be shifted is determined in advance in accordance with the direction in which the image capture apparatus 11 is turned when a photographic image is captured. For example, the example in Fig. 10 is based on the assumption that the image capture apparatus 11 is turned so that, with respect to the position at the center of a photographic image of a certain frame, the position at the center of a photographic image of the next frame is always positioned on the right side in the figure. That is, the example in Fig. 10 is based on the assumption that the movement direction of the image capture apparatus 11 is the rightward direction in the figure.

The reason is as follows. If the cropping positions of strip images are shifted every frame in the direction opposite to the direction in which the position at the center of the photographic images moves in accordance with the movement of the image capture apparatus 11, the same subject that is not moving would be displayed at the same position in individual panoramic images constituting a panoramic moving image.

Similarly to the case of a right-eye panoramic image, also in a case where a left-eye panoramic image is to be generated, the position of the cropped region TL(n) of a strip image from the photographic image P(n) is shifted to the left in Fig. 10 by an amount corresponding to the width from the boundary RL-n to the boundary RL-(n+1).

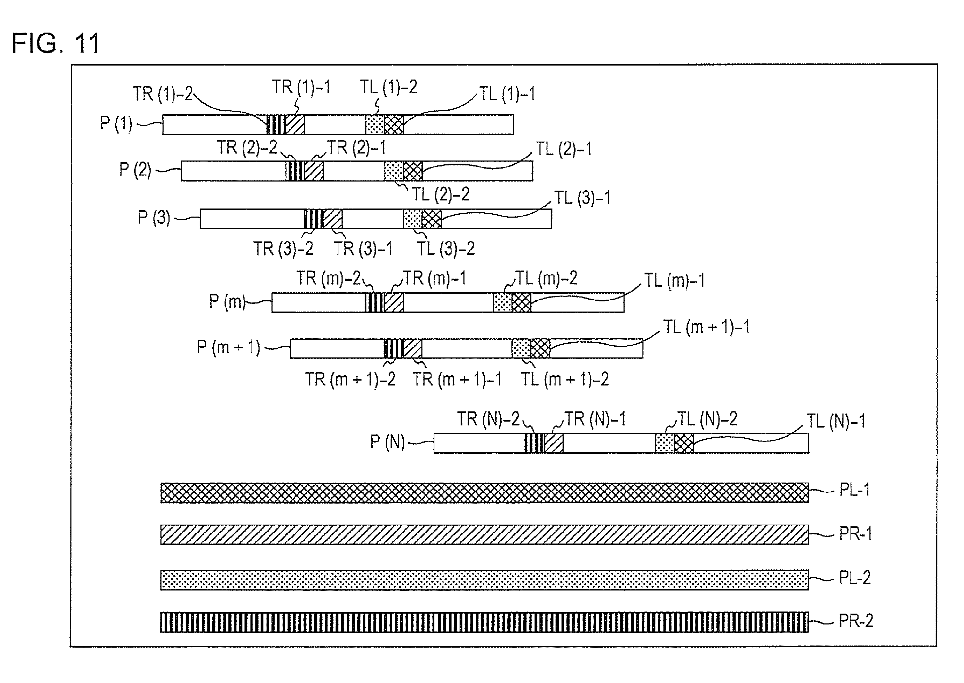

Generating image data of each frame of a panoramic moving image while shifting the cropping position of a strip image every frame in the above way results in the obtainment of, for example, a stereoscopic panoramic moving image as illustrated in Fig. 11. Note that in Fig. 11, the horizontal direction in the figure corresponds to the horizontal direction in Fig. 10. For example, the horizontal direction in Fig. 11 corresponds to the x direction in the xy coordinate system.

In the example in Fig. 11, strip images TL(1)-1 to TL(N)-1 are generated from N photographic images P(1) to P(N), respectively, and these strip images are combined to obtain a left-eye panoramic image PL-1.

Similarly, strip images TL(1)-2 to TL(N)-2 are generated from the N photographic images P(1) to P(N), respectively, and these strip images are combined to obtain a left-eye panoramic image PL-2. Here, the panoramic image PL-1 and the panoramic image PL-2 are images constituting the first frame and the second frame of the left-eye panoramic moving image, respectively.

Additionally, strip images TR(1)-1 to TR(N)-1 are generated from the N photographic images P(1) to P(N), respectively, and these strip images are combined to obtain a right-eye panoramic image PR-1.

Similarly, strip images TR(1)-2 to TR(N)-2 are generated from the N photographic images P(1) to P(N), respectively, and these strip images are combined to obtain a right-eye panoramic image PR-2. Here, the panoramic image PR-1 and the panoramic image PR-2 are images constituting the first frame and the second frame of the right-eye panoramic moving image.

Here, for example, a cropped region of the strip image TL(2)-2 in the photographic image P(2) is the region at the position to which the cropped region of the strip image TL(2)-1 is shifted to the left in the figure by an amount corresponding to the width CW. The value of the width CW changes for each frame of a photographic image.

Further, for example, the same subject at different times is displayed in the strip image TL(1)-1 and the strip image TL(2)-2. Furthermore, the same subject at different times is also displayed in the strip image TL(1)-1 and the strip image TR(m)-1.

In this way, the same subject at different times is displayed in the panoramic images PL-1 to PR-2. Additionally, right-eye and left-eye panoramic images of each of the frames constituting a stereoscopic panoramic moving image have parallax.

Further, since a panoramic image is generated by combining different strip images obtained from photographic images of a plurality of frames, the times at which a subject displayed in respective regions even in a single panoramic image was captured are different.

Note that more specifically, edge portions of each panoramic image are generated using the photographic image P(1) and the photographic image P(N). For example, the left edge portion of the panoramic image PL-1 in the figure is the image from the left edge of the photographic image P(1) to the right edge portion of the strip image TL(1)-1,

Referring back to the description of the flowchart of Fig. 9, in a case where it is determined in step S44 that a stereoscopic panoramic moving image of the certain number of frames has been generated, the signal processing unit 24 reads a panoramic image of each of the frames constituting the stereoscopic panoramic moving image from the recording medium 29 via the drive 28. Then, the signal processing unit 24 supplies the read right-eye and left-eye panoramic images to the compression/expansion unit 27, and instructs it to decode the right-eye and left-eye panoramic images. Then, the process proceeds to step S45.

In step S45, the compression/expansion unit 27 decodes the image data of the stereoscopic panoramic moving image supplied from the signal processing unit 24, that is, panoramic images, using, for example, the JPEG method, and supplies the resulting image data to the signal processing unit 24.

In step S46, the signal processing unit 24 reduces the size of the right-eye and left-eye panoramic images of each of frames constituting the stereoscopic panoramic moving image to a predetermined size. For example, a size reduction process is performed so as to obtain a size that allows an entire panoramic image to be displayed on the display screen of the display unit 31.

When the size of the stereoscopic panoramic moving image is reduced, the signal processing unit 24 supplies the size-reduced stereoscopic panoramic moving image to the display control unit 30. Note that the size-reduced stereoscopic panoramic moving image may also be supplied to and recorded on the recording medium 29.

In step S47, the display control unit 30 supplies the stereoscopic panoramic moving image obtained from the signal processing unit 24 to the display unit 31 to cause the reproduction of the stereoscopic panoramic moving image to be started. That is, the display control unit 30 supplies the respective frames of the right-eye and left-eye panoramic moving images to the display unit 31 in sequence at certain time intervals to display them stereoscopically using the lenticular method.

Specifically, the display unit 31 divides the right-eye and left-eye panoramic images of each frame into several strip-like images, and the right-eye images and left-eye images obtained by division are alternately arranged side by side in a certain direction and displayed. Thereby, a stereoscopic panoramic moving image is displayed. The light rays of the right-eye panoramic image and left-eye panoramic image obtained by division and displayed in the above manner are directed to the right eye and the left eye of the user who views the display unit 31, using the lenticular lens included in the display unit 31. Thereby, a stereoscopic panoramic moving image is observed by the eyes of the user.

When the stereoscopic panoramic moving image is displayed on (reproduced by) the display unit 31, the stereoscopic panoramic moving image reproducing process ends. Thereafter, the process proceeds to step S17 in Fig. 6.

In the above manner, the image capture apparatus 11 generates a plurality of right-eye strip images and a plurality of left-eye strip images, while shifting a cropped region, from each of a plurality of photographic images captured at different times, and combines the strip images to generate a stereoscopic panoramic moving image of each frame.

The stereoscopic panoramic moving image generated in the above manner enables, in addition to giving movement to a captured subject and expressing the movement, stereoscopic display of the subject. Thus, a captured image of the subject can be more effectively displayed.

In addition, a subject in respective regions in a single panoramic image has been captured at different times. Thus, a more interesting image can be presented. That is, the capture image of the subject can be more effectively displayed.

Note that in the foregoing description, N photographic images are captured, and all the photographic images are temporarily recorded on the buffer memory 26, after which a stereoscopic panoramic moving image is generated using these photographic images. However, the generation of a stereoscopic panoramic moving image may be performed simultaneously while photographic images are being captured.

Furthermore, in the above description, after a stereoscopic panoramic moving image is generated, the size of the stereoscopic panoramic moving image is reduced. However, a size-reduced stereoscopic panoramic moving image may be generated directly from photographic images. In this case, the amount of processing required until a stereoscopic panoramic moving image is reproduced can be made smaller, resulting in more rapid display of the stereoscopic panoramic moving image. Further, an apparatus such as a personal computer may be provided with a function for generating a stereoscopic panoramic moving image from photographic images, and may be designed to generate a stereoscopic panoramic moving image from photographic images captured using a camera.

### [Description of Stereoscopic Sub-Moving Image Reproduction Process]

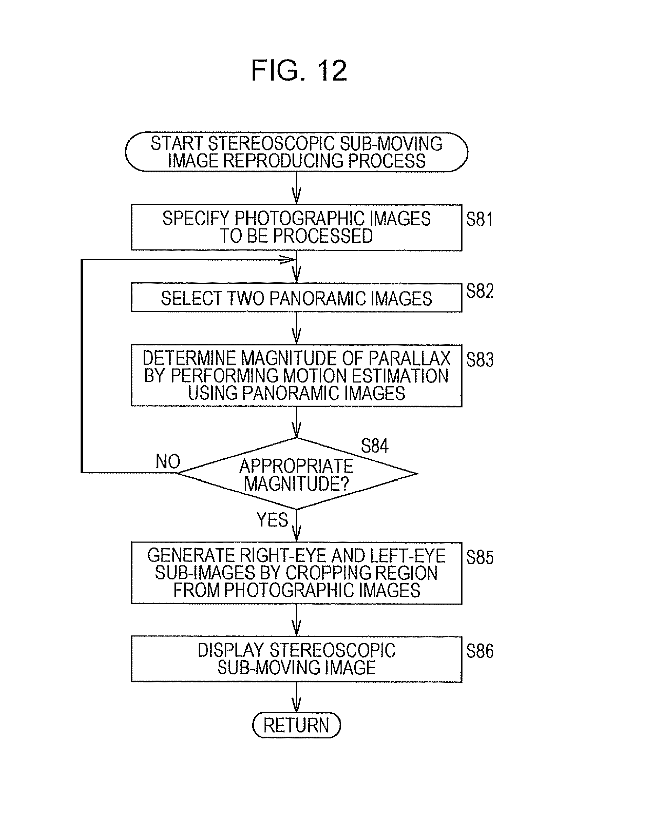

Next, a stereoscopic sub-moving image reproducing process corresponding to the processing of step S19 in Fig. 6 will be described with reference to a flowchart of Fig. 12. The stereoscopic sub-moving image reproducing process is started when the user specifies a certain position in a stereoscopic panoramic moving image and instructs reproduction of a stereoscopic sub-moving image.

In step S81, the parallax calculation unit 73 of the stereoscopic sub-moving image generation unit 63 specifies, based on photographic images and center coordinates recorded on the buffer memory 26 and based on a stereoscopic panoramic moving image, photographic images to be processed among the photographic images in accordance with a signal from the operation input unit 21.

That is to say, the parallax calculation unit 73 specifies a region that is centered around the position specified by the user in panoramic images constituting the stereoscopic panoramic moving image and that is defined by the enlargement magnification specified by the user. For example, the region BP in Fig. 3 is specified as a region to be displayed in a stereoscopic sub-moving image.

Then, the parallax calculation unit 73 sets, as photographic images to be processed, photographic images in which a subject included in the region BP is displayed. That is, in a case where each photographic image is arranged in the xy coordinate system, photographic images including a region in the xy coordinate system corresponding to the region BP among a plurality of photographic images are set as photographic images to be processed. Therefore, photographic images of a plurality of consecutive frames are specified as objects to be processed.

In step S82, the parallax calculation unit 73 selects panoramic images in one of the panoramic moving images constituting a stereoscopic panoramic moving image currently being reproduced, for example, two panoramic images constituting the left-eye panoramic moving image.

For example, a panoramic image in the left-eye panoramic moving image, which is generated using the portion of the same subject as the subject in the region BP in the photographic image with the oldest frame number, and the panoramic image of the frame subsequent to the panoramic image are selected from among the photographic image group to be processed. Note that in a case where there are a plurality of left-eye panoramic images generated using the portion of the same subject as the subject in the region BP in the photographic image with the oldest frame number, the panoramic image with the oldest frame number and the panoramic image of the subsequent frame are selected from among these panoramic images.

In step S83, the parallax calculation unit 73 performs motion estimation using the selected two panoramic images, and determines the magnitude of parallax.

For example, it is assumed that the left-eye panoramic image PL-m of frame m and the panoramic image PL-(m+1) of frame (m+1) have been selected. In this case, the parallax calculation unit 73 divides the panoramic image PL-(m+1) into several blocks, and searches for which position in the panoramic image PL-m the subject displayed in these blocks is displayed at to calculate motion vectors of the respective blocks. Thereby, a movement in each region in the panoramic image is detected.

Here, in the image capture area, the side closer to the image capture apparatus 11 is called a foreground side, and the side farther from the image capture apparatus 11 is called a background side. Then, the motion vectors of the respective blocks obtained by motion estimation have the following features.

That is to say, the motion vectors of the blocks are: a block including a subject closer to the background side has a larger vector in the same direction as the movement direction (x direction) of the image capture apparatus 11 when photographic images are captured, for example, in the rightward direction in Fig. 11. Conversely, a block including a subject closer to the foreground side has a larger vector in the direction opposite to the movement direction of the image capture apparatus 11 when photographic images are captured, for example, in the leftward direction in Fig. 11.

Therefore, in a block for which the largest motion vector is obtained in the movement direction of the image capture apparatus 11 among the respective blocks, a subject at the position closest to the background side in the panoramic image is displayed. Conversely, in a block for which the largest motion vector is obtained in the direction opposite to the movement direction of the image capture apparatus 11 among the respective blocks, a subject at the position closest to the foreground side in the panoramic image is displayed.

Generally, an entire panoramic image includes more subjects in the background than subjects in the foreground, and the motion vectors of many blocks should be vectors in the movement direction of the image capture apparatus 11.
The parallax calculation unit 73 selects a motion vector with a magnitude that has been detected most frequently among the motion vectors of the blocks whose direction is the movement direction of the image capture apparatus 11. That is, the movement indicated by the selected motion vector is used as the average movement of the background in the panoramic image.

Then, the parallax calculation unit 73 extracts a block in the region BP to be displayed from now on in the panoramic image (region at the same position as the region BP), and determines the difference between the motion vector of the extracted block and the selected motion vector. The computation of the difference is equivalent to the process of shifting, from the state where two panoramic images are arranged side by side so as to overlap, one of the panoramic images by an amount corresponding to the selected motion vector so that the parallax of the background is canceled. That is, the computation of the difference is equivalent to the side-by-side arrangement of two panoramic images so that a subject in the background appears in an overlapping manner.

The parallax calculation unit 73 specifies a motion vector having the largest magnitude, whose direction is the direction opposite to the movement direction of the image capture apparatus 11, among the motion vectors obtained after the calculation of the difference, and uses the magnitude of the specified motion vector as the magnitude of the parallax of the region BP in a panoramic image between two frames.

The block with the motion vector specified in the above manner should include a subject at the position closest to the foreground side within the region BP. Therefore, the determined magnitude of the parallax of the region BP corresponds to the magnitude of the relative movement of the subject located closest to the foreground side within the region BP with respect to the average background of the panoramic image. In other words, the determined magnitude corresponds to the magnitude of the relative parallax of the subject closest to the foreground side within the region BP with respect to the parallax of the average background of the panoramic image.

For further discussion about that, since, on average, a subject in the background is also possibly included in the region BP, the magnitude of the parallax of the region BP corresponds to the magnitude of the relative parallax of the subject on the foreground side with respect to the parallax of the background within the region BP.

In step S84, the parallax calculation unit 73 determines whether or not the determined magnitude of the parallax is a predetermined appropriate magnitude. For example, in a case where the determined magnitude of the parallax is greater than or equal to a predetermined magnitude, it is determined that the determined magnitude is an appropriate magnitude.

In a case where it is determined in step S84 that the determined magnitude is not an appropriate magnitude, the process returns to step S82, and the process described above is repeatedly performed. That is to say, two new panoramic images are selected, and the magnitude of the parallax of the region BP is determined.

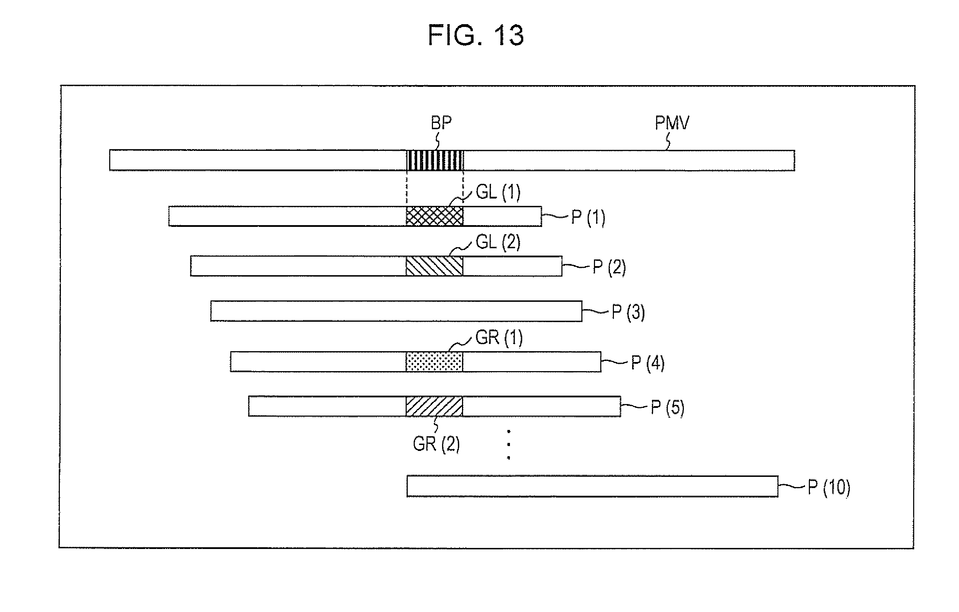

For example, as illustrated in Fig. 13, it is assumed that ten photographic images, namely, photographic images P(1) to P(10), have been specified as photographic images to be processed in which a subject in a region BP in a stereoscopic panoramic moving image PMV is displayed. Note that in Fig. 13, portions corresponding to those in the case illustrated in Fig. 3 are assigned the same numerals and the descriptions thereof are omitted. Additionally, in Fig. 13, the horizontal direction in the figure corresponds to the horizontal direction in Fig. 10, that is to say, the x direction in the xy coordinate system.

In Fig. 13, individual photographic images and a panoramic image (stereoscopic panoramic moving image PMV) are arranged side by side so that the same subject appears to be at the same position in the horizontal direction in theses images. In step S82 described above, in a case where two panoramic images are selected at the beginning, first, the photographic image P(1) with the oldest frame number and the photographic image P(2) with the next oldest frame number are selected. Then, panoramic images generated using these photographic images are selected. That is, a panoramic image for which a region in which the subject in the region BP in the photographic image P(1) is displayed is used as a strip image, and a panoramic image for which a region in which the subject in the region BP in the photographic image P(2) is displayed is used as a strip image are selected.

Thereafter, the parallax of the region BP is determined from the selected panoramic images. In a case where it is determined in step S84 that the magnitude of the parallax is not appropriate, then, the photographic image P(1) and the photographic image P(3) are selected, and panoramic images generated using these photographic images are selected.

In this manner, the photographic image P(1) and the photographic image of the closest frame to the photographic image P(1) among the unselected photographic images are selected until the determined magnitude of the parallax of the region BP is appropriate. Then, the magnitude of the parallax of the region BP is determined using panoramic images generated using these selected photographic images.

Consequently, for example, it is assumed that it is determined that the magnitude of the parallax of the region BP is appropriate when the photographic image P(1) and the photographic image P(4) are selected. In this case, a region GL(1) in the photographic image P(1) is cropped to produce a left-eye sub-image constituting the first frame in a stereoscopic sub-moving image, and a region GR(1) in the photographic image P(4) is cropped to produce a right-eye sub-image constituting the first frame in the stereoscopic sub-moving image.

Here, the region GL(1) and the region GR(1) are regions in which the subject in the region BP is displayed. That is, in a case where photographic images are arranged side by side in the xy coordinate system, the regions in the photographic images, which are at the same position as the region BP, are cropped to produce sub-images.

Similarly, a region GL(2) in the photographic image P(2) is cropped to produce a left-eye sub-image of the second frame in the stereoscopic sub-moving image, and a region GR(2) in the photographic image P(5) is cropped to produce a right-eye sub-image of the second frame in the stereoscopic sub-moving image.

In the above manner, right-eye and left-eye sub-images of the next frame in the stereoscopic sub-moving image are sequentially generated from the photographic images of the next frame. In the example in Fig. 13, regions in which the subject in the region BP is displayed are cropped from the photographic images P(1) to P(7), and left-eye sub-images of the first to seventh frames are generated. Additionally, regions in which the subject in the region BP is displayed are cropped from the photographic images P(4) to P(10), and right-eye sub-images of the first to seventh frames are generated. Thereby, stereoscopic sub-moving images of seven frames in total are obtained.

Here, the photographic image P(1) and the photographic image P(4), which are used for the generation of the first frame of the stereoscopic sub-moving image, have parallax with the same magnitude as the magnitude of the parallax of the region BP. More specifically, the magnitude of the relative parallax of the subject on the foreground side in the region GL(1) and the region GR(1) with respect to the parallax of the subject in the background corresponds to the magnitude of the parallax used for the determination processing of step S84.

Therefore, if the magnitude of the parallax used for the determination processing is defined to be an appropriate magnitude, the subject on the foreground side in the right-eye and left-eye sub-images constituting the same frame in the stereoscopic sub-moving image has a relatively predetermined appropriate magnitude of parallax with respect to the parallax of the subject in the background. That is to say, the subject to be displayed is put in proper perspective, and a stereoscopic image with depth can be displayed.

At this time, two photographic images used for the generation of the first frame in the stereoscopic sub-moving image are defined on the basis of the magnitude of the parallax of the subject closest to the foreground side because the parallax between frames of photographic images is larger for the subject in the foreground than the subject in the background. That is, the reason is that if a photographic image used for the generation of the first frame in the stereoscopic sub-moving image is selected using the subject on the background side as a reference, in some cases, the parallax of the subject on the foreground side may be excessively large or small, resulting in degraded stereoscopic effect on the image.

In this manner, in a case where the background in a stereoscopic panoramic moving image is to be displayed on an enlarged scale with a large magnification, the background has a small parallax and has no depth. Thus, the image capture apparatus 11 generates left- and right-eye sub-images using photographic images of frames that are discrete to some extent so that a sufficient parallax can be obtained.

Conversely, in a case where the foreground in a stereoscopic panoramic moving image is to be displayed on an enlarged scale with a small magnification, the foreground has a large parallax and a sufficient parallax can be obtained even for photographic images of frames that are close to each other. Thus, the image capture apparatus 11 generates left- and right-eye sub-images using photographic images of frames that are close to some extent.

That is to say, appropriate parallax control is performed in accordance with which region in the image capture area to be captured when a photographic image is captured is to be displayed on an enlarged scale, and a stereoscopic sub-moving image having an optimum parallax is generated.

Note that while in the foregoing description, motion estimation is performed using panoramic images, motion estimation may be performed using, in the panoramic images, regions in which the subject in the region BP is displayed or photographic images themselves in which the subject in the region BP is displayed. The reason is that if motion estimation utilizing photographic images such as panoramic images or photographic images themselves is performed, the parallax of the region BP can be determined.

Referring back to the description of the flowchart of Fig. 12, if it is determined in step S84 that the determined magnitude of the parallax of the region BP is an appropriate magnitude, the process proceeds to step S85.

In step S85, the stereoscopic sub-moving image generation unit 63 generates right-eye and left-eye sub-images by cropping a region in which the subject in the region BP is displayed from the photographic image to be processed, using the center coordinates of the photographic images.

For example, as illustrated in Fig. 13, the stereoscopic sub-moving image generation unit 63 crops a region in which the subject in the region BP is displayed from the photographic images P(1) to P(7) to produce sub-images constituting the first to seventh frames in the right-eye sub-moving image.

Additionally, the stereoscopic sub-moving image generation unit 63 crops a region in which the subject in the region BP is displayed from the photographic images P(4) to P(10) to produce sub-images constituting the first to seventh frames in the left-eye sub-moving image. Then, theses right-eye and left-eye sub-image groups serve as a stereoscopic sub-moving image.

When a stereoscopic sub-moving image is generated, the stereoscopic sub-moving image generation unit 63 supplies the obtained stereoscopic sub-moving image to the display control unit 30.

In step S86, the display control unit 30 supplies the stereoscopic sub-moving image supplied from the stereoscopic sub-moving image generation unit 63 to the display unit 31 to display it. That is, the display control unit 30 supplies pairs of right-eye and left-eye sub-images constituting the respective frames in the stereoscopic sub-moving image to the display unit 31 in sequence at certain time intervals, and causes the pairs to be stereoscopically displayed using the lenticular method.

When a stereoscopic sub-moving image is displayed on the display unit 31, the stereoscopic sub-moving image reproducing process ends. Thereafter, the moving image reproducing process in Fig. 6 also ends.

In the above manner, the image capture apparatus 11 specifies, in accordance with the magnitude of a region to be displayed in the image capture area to be captured, that is, in accordance with the specified position in the panoramic image and the specified enlargement magnification, two photographic images having a parallax appropriate for the region to be displayed and including the region. Then, the image capture apparatus 11 generates right-eye sub-images from photographic images of consecutive frames including one of the two photographic images, and generates left-eye sub-images from photographic images of consecutive frames including the other photographic image, thereby obtaining a stereoscopic sub-moving image.

In this manner, photographic images having an appropriate parallax are specified in accordance with a region to be displayed, and a stereoscopic sub-moving image is generated from these photographic images. Therefore, a stereoscopic sub-moving image having a more appropriate parallax can always be obtained regardless of a region to be displayed.

Note that while in the foregoing description, a stereoscopic panoramic moving image is displayed in order to specify a region to be displayed as a stereoscopic sub-moving image, a stereoscopic panoramic image formed of right-eye and left-eye panoramic images may be displayed.
In this case, the user specifies a position in the stereoscopic panoramic image and the magnification for enlarged display, and instructs reproduction of a stereoscopic sub-moving image.

Additionally, instead of displaying a stereoscopic sub-moving image when a position in a stereoscopic panoramic moving image and a magnification are specified, a stereoscopic sub-image formed of right-eye and left-eye sub-images may be displayed. In such a case, for example, a pair of sub-images cropped from the region GL(1) and region GR(1) in Fig. 13 is displayed as a stereoscopic sub-image.

The series of processes described above can be executed by hardware, or can be executed by software. In a case where the series of processes is executed by software, a program constituting the software is installed from a program recording medium into a computer incorporated in dedicated hardware or, for example, a general-purpose personal computer or the like capable of executing various functions by installing various programs therein.

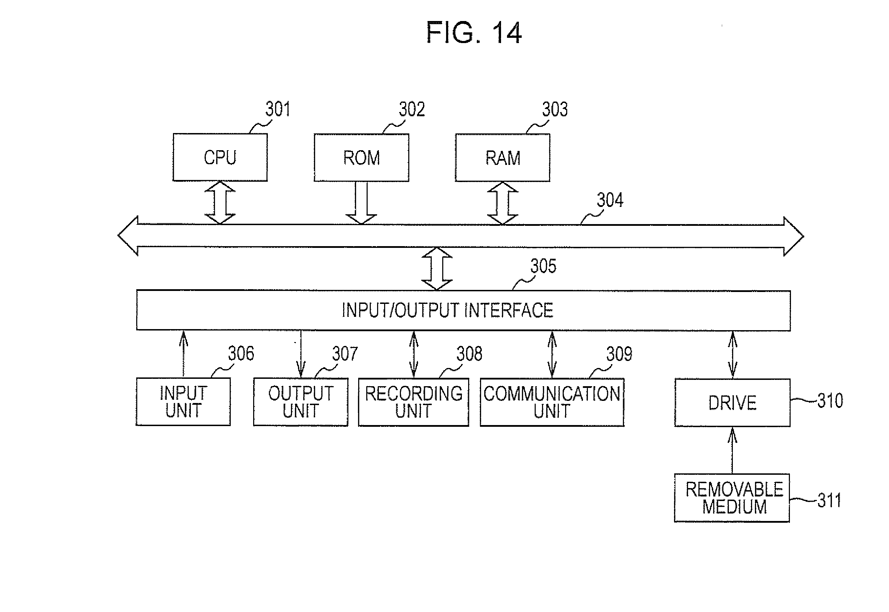

Fig. 14 is a block diagram illustrating an example configuration of hardware of a computer that executes the series of processes described above using a program.

In the computer, a CPU (Central Processing Unit) 301, a ROM (Read Only Memory) 302, and a RAM (Random Access Memory) 303 are connected to one another via a bus 304.

Further, an input/output interface 305 is connected to the bus 304. An input unit 306 formed of a keyboard, a mouse, a microphone, and the like, an output unit 307 formed of a display, speakers, and the like, a recording unit 308 formed of a hard disk, a non-volatile memory, and the like, a communication unit 309 formed of a network interface and the like, and a drive 310 that drives a removable medium 311 such as a magnetic disk, an optical disk, a magneto-optical disk, or a semiconductor memory are connected to the input/output interface 305.

In the computer configured as above, the CPU 301 loads the program recorded on, for example, the recording unit 308 into the RAM 303 via the input/output interface 305 and the bus 304 and executes the program. Thereby, the series of processes described above is performed.

The program executed by the computer (CPU 301) is recorded on the removable medium 311 that is a packaged medium formed of, for example, a magnetic disk (including a flexible disk), an optical disk (such as a CD-ROM (Compact Disc-Read Only Memory) or a DVD (Digital Versatile Disc)), a magneto-optical disk, a semiconductor memory, or the like, or is provided via a wired or wireless transmission medium such as a local area network, the Internet, or digital satellite broadcasting.

Then, the program can be installed into the recording unit 308 via the input/output interface 305 by attaching the removable medium 311 to the drive 310. Furthermore, the program can be received by the communication unit 309 via a wired or wireless transmission medium, and can be installed into the recording unit 308. Alternatively, the program can be installed into the ROM 302 or the recording unit 308 in advance.

Note that the program executed by the computer may be a program in which processes are performed in a chronological manner in accordance with the order described herein, or may be a program in which processes are performed in parallel or at a necessary timing such as when called.

Note that embodiments of the present invention are not to be limited to the embodiment described above, and a variety of modifications can be made without departing from the scope of the present invention.

### Reference Signs List

11 image capture apparatus, 22 image capture unit, 24 signal processing unit, 61 motion estimation unit, 62 stereoscopic panoramic moving image generation unit, 63 stereoscopic sub-moving image generation unit, 71 coordinate calculation unit, 72 strip image generation unit, 73 parallax calculation unit

## Claims

1. An image processing apparatus that generates, based on a plurality of photographic images obtained by image capturing using image capturing means while moving the image capturing means, a first sub-image and a second sub-image having a parallax from each other in which a specific region to be captured when the photographic images are captured is displayed, comprising:
specifying means for specifying two photographic images between which a parallax of a subject in the specific region has a predetermined magnitude among a plurality of the photographic images in which the specific region is displayed, by performing motion estimation utilizing the photographic images; and
sub-image generating means for generating the first sub-image and the second sub-image by cropping a region in which the specific region is displayed from each of the two photographic images.

2. The image processing apparatus according to Claim 1, wherein the sub-image generating means individually generates a plurality of first sub-images by cropping the region in which the specific region is displayed individually from a plurality of the photographic images which have been consecutively captured and which include one of the two photographic images, and individually generates a plurality of second sub-images by cropping the region in which the specific region is displayed individually from a plurality of the photographic images which have been consecutively captured and which include the other of the two photographic images.

3. The image processing apparatus according to Claim 2, further comprising
display control means for causing a plurality of image pairs, each of which is formed of the first sub-image and the second sub-image, to be displayed in sequence at certain time intervals so that the specific region is stereoscopically displayed by simultaneously displaying the image pairs.

4. The image processing apparatus according to Claim 2, further comprising
panoramic image generating means for generating a panoramic image in which a region including the specific region to be captured is displayed, by arranging side by side and combining individual strip images obtained by cropping a certain region from the plurality of the photographic images, and for generating another panoramic image by arranging side by side and combining individual other strip images obtained by cropping a region at a position to which the certain region is shifted in a specific direction opposite to a direction corresponding to a movement direction of the image capturing means from the plurality of the photographic images,
wherein the specifying means determines a magnitude of the parallax of the subject in the specific region by detecting movement in each region in the panoramic image by performing motion estimation using the panoramic image and the other panoramic image, and, in a case where the parallax of the subject in the specific region has the predetermined magnitude, uses, as the two photographic images, the photographic images respectively used for generation of the panoramic image and the other panoramic image in which the subject in the specific region is displayed.

5. The image processing apparatus according to Claim 4, wherein the specifying means identifies the magnitude of the parallax as the predetermined magnitude in a case where a relative magnitude of a largest movement in the specific direction within the specific region with respect to a magnitude of a movement in the direction corresponding to the movement direction, which has been detected most frequently, is the predetermined magnitude.

6. An image processing method for an image processing apparatus that generates, based on a plurality of photographic images obtained by image capturing using image capturing means while moving the image capturing means, a first sub-image and a second sub-image having a parallax from each other in which a specific region to be captured when the photographic images are captured is displayed, the image processing apparatus including
specifying means for specifying two photographic images between which a parallax of a subject in the specific region has a predetermined magnitude among a plurality of the photographic images in which the specific region is displayed, by performing motion estimation utilizing the photographic images, and
sub-image generating means for generating the first sub-image and the second sub-image by cropping a region in which the specific region is displayed from each of the two photographic images, the image processing method comprising the steps of:
specifying, by the specifying means, the two photographic images in which the parallax has predetermined magnitude among the plurality of the photographic images; and
generating, by the sub-image generating means, the first sub-image and the second sub-image from the two photographic images.

7. A program for image processing for generating, based on a plurality of photographic images obtained by image capturing using image capturing means while moving the image capturing means, a first sub-image and a second sub-image having a parallax from each other in which a specific region to be captured when the photographic images are captured is displayed, the program causing a computer to execute a process comprising the steps of:
specifying two photographic images between which a parallax of a subject in the specific region has a predetermined magnitude among a plurality of the photographic images in which the specific region is displayed, by performing motion estimation utilizing the photographic images; and
generating the first sub-image and the second sub-image by cropping a region in which the specific region is displayed from each of the two photographic images.
